(19) Europäisches Patentamt
European Patent Office
Office européen des brevets

(11) Numéro de publication: **0 249 535 B1**

(12) **FASCICULE DE BREVET EUROPEEN**

(45) Date de publication du fascicule du brevet: **27.06.90**

(21) Numéro de dépôt: **87401247.9**

(22) Date de dépôt: **04.06.87**

(51) Int. Cl.⁵: **C08F 220/12**, C10M 149/10 // (C10N30/02, 30:04),(C08F220/12, 226:06),(C10M149/10, 143:10, 145:14)

(54) **Compositions de copolymères utilisables notamment comme additifs pour huiles hydrocarbonnées.**

(30) Priorité: **13.06.86 FR 8608697**

(43) Date de publication de la demande: **16.12.87 Bulletin 87/51**

(45) Mention de la délivrance du brevet: **27.06.90 Bulletin 90/26**

(84) Etats contractants désignés: **CH DE ES GB LI LU NL**

(56) Documents cités: **GB-A- 849 048**

(73) Titulaire: **INSTITUT FRANCAIS DU PETROLE, 4, Avenue de Bois-Préau, F-92502 Rueil-Malmaison(FR)**

(72) Inventeur: **Jarrin, Jacques, 56, rue du point du Jour, F-92100 Boulogne(FR)**
Inventeur: **Robine, Magali, 10, rue Massena, F-92500 Rueil Malmaison(FR)**
Inventeur: **Durand, Jean-Pierre, 61 D rue Jules Ferry, F-78400 Chatou(FR)**

**EP 0 249 535 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne des compositions de copolymères utilisables notamment comme additifs pour huiles hydrocarbonées présentant à la fois un effet sur le comportement rhéologique de celles-ci (viscosité, point d'écoulement) et des propriétés dispersantes.

Il est connu d'incorporer aux additifs classiques d'écoulement des huiles hydrocarbonées, des composés qui leur confèrent des propriétés dispersantes.

Les différentes catégories d'additifs dits de viscosité, utilisés notamment dans les formulations d'huiles moteurs (pour en améliorer le pouvoir épaississant, la sélectivité, le point de congélation, la résistance au cisaillement, etc.) sont décrites en détail par exemple par J.BRIANT et coll. dans l'ouvrage "Propriétés rhéologiques des lubrifiants" Editions TECHNIP, Paris.

L'incorporation par copolymérisation, greffage, esterification ou maléinisation de radicaux portant des groupements généralement azotés ou oxygénés permet de conférer à ces additifs des propriétés dispersantes. Ceci permet de réduire sensiblement la quantité d'additif dispersant à utiliser dans la formulation d'huile lubrifiante. Les monomères les plus couramment utilisés pour la copolymérisation ou le greffage sont la 4-vinyl pyridine, la N-vinyl pyrrolidone et le N-vinyl imidazole. Une liste plus exhaustive des différents composés utilisés pour conférer des propriétés dispersantes aux additifs de viscosité figure dans l'ouvrage cité plus haut.

On connait également un additif dispersant obtenu par réaction d'un ou plusieurs polyisobutène-succinimides sur le trichlorure de triazine (US-A 4 116 875).

On sait enfin que l'aminolyse du triallylcyanurate par des amines primaires permet de préparer des composés riches en azote qui peuvent être utilisés pour stabiliser des polyoléfines contre l'oxydation à chaud. ("Synthesis", pp. 182-185, mars 1975).

On a maintenant découvert de nouveaux composés copolymériques qui,utilisés comme additifs dans diverses huiles hydrocarbonées présentent des propriétés très avantageuses, tant en ce qui concerne leur action sur les propriétés rhéologiques de l'huile que pour leur effet dispersant.

Les compositions de copolymères de l'invention peuvent être définies, d'une manière générale, par le fait qu'elles comprennent des motifs dérivant d'un ou plusieurs esters acryliques ou méthacryliques, d'un ou plusieurs monomères obtenus par réaction d'amines ou de polyamines aliphatiques sur le triallylcyanurate, et éventuellement d'un ou plusieurs monomères vinylaromatiques.

Plus particulièrement, les compositions de copolymères de l'invention, qui peuvent être préparées par copolymérisation radicalaire, contiennent de 0 à 35% en poids d'un ou plusieurs monomères vinylaromatiques, de 55 à 99,8% en poids d'un ou plusieurs monomères de type acrylate ou méthacrylate d'alkyle linéaire ou ramifié comportant de 1 à 22 atomes de carbone, et de 0,2 à 10% en poids d'un ou plusieurs monomères vinyliques azotés dérivés du triallylcyanurate. Une proportion avantageuse pour le monomère vinylique azoté va de 0,5 à 4 % en poids, les proportions des autres monomères étant alors ajustées en conséquence.

Les monomères vinyliques azotés, dont la mise en jeu dans la préparation des copolymères considérés dans l'invention constitue la caractéristique principale de celle-ci, sont préparés par réaction entre le triallylcyanurate et une ou plusieurs amines ou polyamines répondant à la formule générale

$$R^1 \leftarrow\!\!\!( \underset{\displaystyle |}{\overset{R^2}{}}\!\!N - A )_x NH_2$$

dans laquelle $R^1$ représente l'atome d'hydrogène ou un radical alkyle, linéaire ou ramifié de 1 à 24 atomes de carbone ($-C_nH_{2n+1}$), <u>x</u> peut être 0 si <u>n</u> est d'au moins 4, et peut être un nombre de 1 à 10 dans tous les cas ; $R^2$, défini lorsque <u>x</u> n'est pas nul, représente l'atome d'hydrogène ou un radical alkyle, linéaire ou ramifié, de 1 à 24 atomes de carbone ($-C_mH_{2m+1}$), et A, défini lui aussi lorsque <u>x</u> n'est pas nul, représente un radical alkylène de 2 à 6 atomes de carbone, plus particulièrement le radical éthylène, propylène, ou isopropylène.

Comme exemples d'amines utilisables, on peut citer :

- des monoamines monoprimaires de formule $R^1 NH_2$, telles que par exemple la n-butylamine, la sec-butylamine, la tertiobutylamine, la n-pentylamine, la 4,3 ou 2 méthyl-n-butylamine, la n-hexylamine, la n-heptylamine la n-octylamine, la n-nonylamine,l'eicosylamine et la docosylamine ; ainsi que leurs isomères ;
- des polyamines monoprimaires de formule

$$R^1 ( \overset{R^2}{\underset{}{N}} - A )_x NH_2 ,$$

telles que par exemple la N,N-diméthyl éthylènediamine, la N-oléyl propane diamine, le N,N-diméthyl diamino-propane, le N,N-diéthyl diaminopropane, la N,N diméthyl diamino-isopropane;

et
- des polyamines biprimaires de formule $H-(NH-A)_xNH_2$, telles que par exemple l'éthylène diamine, la propylène diamine, la diéthylène triamine, la dipropylène triamine, la triéthylène tétramine, la tripropylène tétramine, la tétraéthylène pentamine, la tétrapropylène pentamine.

Dans la réaction d'aminolyse du triallylcyanurate, les proportions d'amines mises en jeu peuvent être, pour les amines monoprimaires ou biprimaires, par exemple de 1 à 2 moles par mole de triallylcyanurate.

La réaction avec 1 mole d'amine peut se faire selon le schéma suivant :

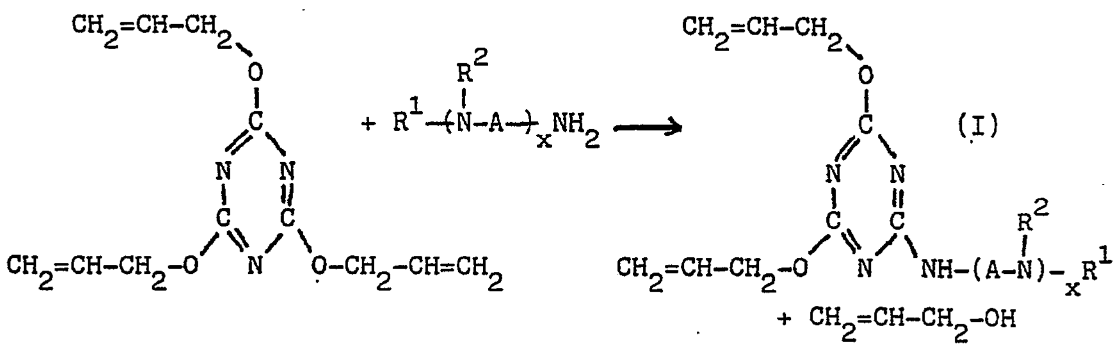

Eventuellement, la réaction peut être renouvelée sur au moins une partie du produit (I) selon le schéma suivant :

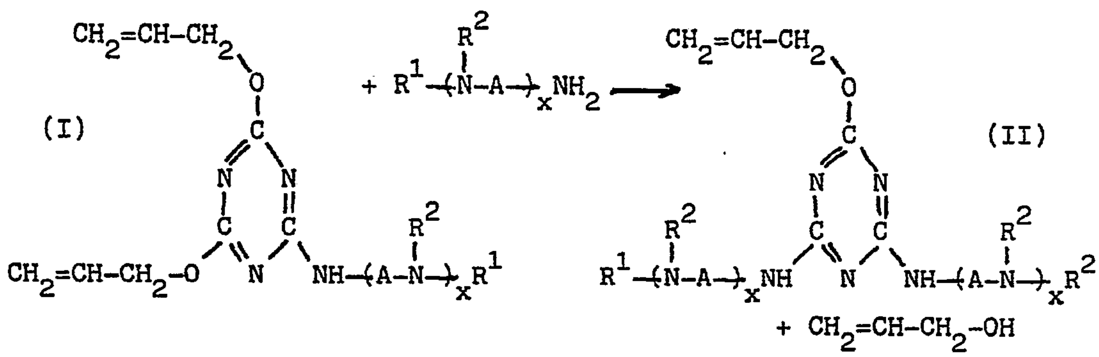

De plus, pour les amines biprimaires, la proportion d'amine peut être par exemple d'environ 0,5 mole par mole de triallylcyanurate et la réaction peut se faire selon le schéma suivant :

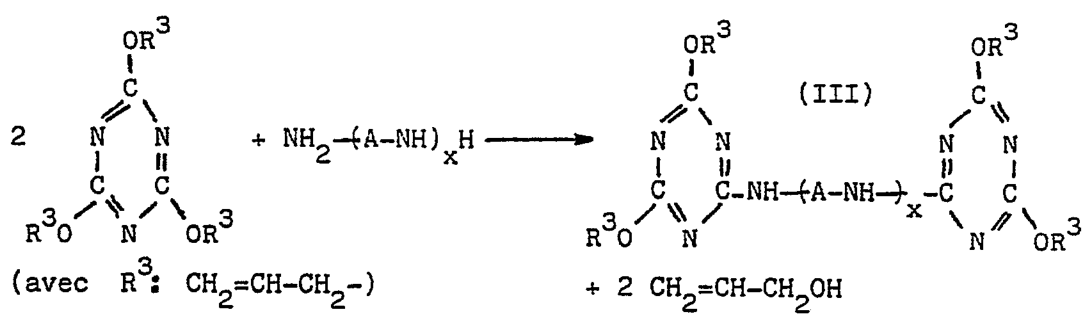

On peut encore envisager de faire réagir sur le produit ainsi obtenu une amine monoprimaire ou biprimaire

$$R^1-(\overset{R^2}{\overset{|}{N}}-A)_x-NH_2 \quad ,$$

à raison d'environ 1, 2 ou 3 moles par mole du produit (III) ci-dessus (c'est à dire d'environ 0,5, 1 ou 1,5 moles par mole de triallylcyanurate de départ).

Les conditions de la réaction d'aminolyse du triallylcyanurate sont connues. Elles ont été décrites notamment par H.AHNE et coll, dans "Synthesis", mars 1975 , pp. 182-185, les proportions des réactifs étant ajustées selon la stoechiométrie souhaitée. Ainsi, on met en jeu une proportion de composé aminé (monoprimaire et/ou biprimaire) telle que dans chaque produit obtenu il reste globalement au moins une double liaison allylique par molécule. Autrement dit, les produits comportant 1 cycle triazinique peuvent être mono- ou di-substitués et les produits comportant 2 cycles triaziniques peuvent avoir chacun des deux cycles mono ou di-substitué, ou encore au plus un des deux cycles peut être tri-substitué. En réalité, la réaction d'aminolyse du triallylcyanurate conduit à des mélanges de produits ayant des degrés de substitution variés et qu'il est difficile de séparer. On peut cependant les utiliser sous cette forme dans la copolymérisation, après élimination par distillation de l'alcool allylique formé.

L'ester acrylique mis en jeu dans la constitution des compositions de copolymères de l'invention consiste plus particulièrement en un acrylate ou un méthacrylate d'alkyle linéaire ou ramifié renfermant de 1 à 22 atomes de carbone dans le radical alkyle, les méthacrylates d'alkyles étant préférés.

Les esters acryliques peuvent être mis en jeu seuls ou en mélanges entre eux. Ainsi, il est avantageux d'utiliser au moins un méthacrylate d'alkyle relativement léger (par exemple alkyles de 1 à 4 atomes de carbone) et au moins un méthacrylate d'alkyle relativement plus lourd (par exemple alkyles linéaires de 8 à 22 atomes de carbone). Plus particulièrement, l'ensemble des méthacrylates d'alkyles peut comprendre d'environ 5 à 25% en poids d'au moins un méthacrylate d'alkyle linéaire ou ramifié de $C_1$ à $C_4$, d'environ 10 à 80% en poids d'au moins un méthacrylate d'alkyle linéaire de $C_8$ à $C_{14}$ et d'environ 15 à 75% en poids d'au moins un méthacrylate d'alkyle linéaire de $C_{16}$ à $C_{22}$. Les pourcentages en poids sont indiqués par rapport à la quantité totale de méthacrylates.

Le monomère vinylaromatique éventuellement mis en jeu peut consister par exemple en du styrène, de l'$\alpha$-méthyl styrène ou du vinyltoluène, le styrène étant préféré.

Les compositions de copolymères de l'invention peuvent être préparées par copolymérisation radicalaire, à partir des proportions appropriées des monomères.

La copolymérisation est amorcée par un amorceur radicalaire conventionnel tel que ceux couramment utilisés dans ce type de polymérisation (composé azoïque ou peroxydique).

La température de copolymérisation est comprise entre 80 et 130°C, le solvant pouvant être par exemple une huile minérale (100 ou 200N) utilisée en une proportion de 20 à 50% en poids par rapport au milieu réactionnel pris dans son ensemble.

La masse moléculaire moyenne en poids des produits de l'invention peut aller par exemple de 30.000 à 800.000 (telle que déterminée par chromatographie par perméation de gel étalonnée au polyméthacrylate de méthyle). Leur polydispersité est en général inférieure à 5.

Les compositions de copolymères selon l'invention sont utilisées comme additifs de viscosité pour les huiles lubrifiantes, minérales ou synthétiques. Elles sont en général ajoutées en des proportions allant de 0,5 à 10% en poids par rapport à l'huile lubrifiante.

Les exemples suivants illustrent l'invention. Ils ne doivent en aucune manière être considérés comme limitatifs. Les exemples 19 à 24 sont donnés à titre de comparaison. Dans les exemples 1 à 8, on décrit la préparation des monomères azotés dérivés du triallylcyanurate qui seront utilisés dans la préparation des copolymères selon l'invention.

<u>EXEMPLES 1 à 8</u> (Préparations de monomères azotés)

Sur 10g (40 millimoles) de triallylcyanurate (noté TAC), on a fait réagir l'amine indiquée au tableau 1 ci-après en quantité molaire également indiquée. Les réactions sont conduites en l'absence de solvant, à une température comprise entre 40 et 70°C, pendant 30 heures environ.

Sur chacun des produits obtenus, on a déterminé le degré de substitution du triallylcyanurate, défini à partir de la quantité d'alcool allylique récupérée par distillation sous vide en fin de réaction. Comme on le voit dans le tableau 1, compte tenu des proportions molaires choisies, ce degré moyen de substitution peut être voisin de 1 (produits des exemples 1 et 3 à 2 cycles triallylcyanurates reliés par substantiellement 1 molécule d'amine biprimaire) ou voisin de 2 (produits à 1 cycle triallylcyanurate substitué par environ 2 molécules d'amine monoprimaire - exemple 5 à 8, ou par environ 2 molécules d'amine biprimaire - exemple 2 et 4).

Tableau 1

| Exemple N° | Composé aminé $H_2N(A-NR^2)_xR^1$ (*) x | n | m | -A- | quantité mmol | Degré de substitution du TAC |
|---|---|---|---|---|---|---|
| 1 | 4 | 0 | 0 | $-CH_2-CH_2-$ | 20 | 1,05 |
| 2 | 4 | 0 | 0 | $-CH_2-CH_2-$ | 80 | 1,95 |
| 3 | 3 | 0 | 0 | $-CH_2-CH_2-$ | 20 | 1,06 |
| 4 | 3 | 0 | 0 | $-CH_2-CH_2-$ | 80 | 1,98 |
| 5 | 1 | 18 | 0 | $-CH_2-CH_2-CH_2-$ | 80 | 1,8 |
| 6 | 1 | 1 | 1 | $-CH_2-CH_2-CH_2-$ | 80 | 1,96 |
| 7 | 1 | 2 | 2 | $-CH_2-CH_2-CH_2-$ | 80 | 1,95 |
| 8 | 0 | 18 | 0 | - | 80 | 1,95 |

(*) Il est rappelé que, dans la formule du composé aminé, $R^1$ et $R^2$ peuvent représenter chacun l'atome d'hydrogène ou un radical alkyle: respectivement $C_nH_{2n+1}$ et $C_mH_{2m+1}$ (avec n et m chacun de 1 à 24). Lorsque $R^1$, ou $R^2$, représente l'atome d'hydrogène on a noté pour n, ou m, la valeur 0.

EXEMPLES 9 à 24

Dans les exemples 9 à 18, on décrit la préparation de compositions de copolymères selon l'invention utilisant les monomères azotés préparés comme décrit dans les exemples 1 à 8, plusieurs méthacrylates (méthacrylate de méthyle, noté MAM, méthacrylate de lauryle, noté ML, et méthacrylate de stéaryle, noté MS) et du styrène dans les proportions pondérales indiquées dans le tableau 2. Dans les exemples 19 à 24, à des fins de comparaison, on a préparé divers copolymères sans utiliser de monomères azotés tels que ceux mis en jeu dans les exemples 9 à 18, ou en utilisant d'autres monomères azotés : la N-vinylpyrrolidone (notée NVP), le N-vinylimidazole (noté NVI), le triallylcyanurate (noté TAC) et diverses combinaisons de ces monomères. Les proportions pondérales des monomères mis en jeu dans ces exemples comparatifs sont également indiqués au tableau 2.

Dans ces exemples, les "méthacrylate de lauryle" et "méthacrylate de stéaryle", utilisés sont des coupes de méthacrylates d'alkyles respectivement de 8 à 18 et de 14 à 22 atomes de carbone dont on donne ci-après la composition pondérale .

• Méthacrylate de lauryle (en abrégé ML)

13% (±2%) de méthacrylate d'alkyle en $C_8$
16% (±2%) de méthacrylate d'alkyle en $C_{10}$
29% (±2%) de méthacrylate d'alkyle en $C_{12}$
21% (±2%) de méthacrylate d'alkyle en $C_{14}$
14% (±2%) de méthacrylate d'alkyle en $C_{16}$
7% (±2%) de méthacrylate d'alkyle en $C_{18}$

• Méthacrylate de stéaryle (en abrégé MS)

2% (±2%) de méthacrylate d'alkyle en $C_{14}$
51% (±2%) de méthacrylate d'alkyle en $C_{16}$
30% (±2%) de méthacrylate d'alkyle en $C_{18}$
14% (±2%) de méthacrylate d'alkyle en $C_{20}$
3% (±2%) de méthacrylate d'alkyle en $C_{22}$

TABLEAU 2

| exemple N° | monomère azoté N° | monomère azoté % pds | MAM % pds | ML % pds | MS %pds | Styrène % pds |
|---|---|---|---|---|---|---|
| 9 | 1 | 1 | 8 | 59 | 32 | 0 |
| 10 | 1 | 1 | 6 | 48 | 20 | 25 |
| 11 | 1 | 3,7 | 7 | 48,3 | 21 | 20 |
| 12 | 2 | 1 | 8 | 49 | 22 | 20 |
| 13 | 3 | 3,7 | 6 | 46,3 | 19 | 25 |
| 14 | 4 | 3,7 | 7 | 48,3 | 21 | 20 |
| 15 | 5 | 3,7 | 7 | 48,3 | 21 | 20 |
| 16 | 6 | 1 | 8 | 49 | 22 | 20 |
| 17 | 7 | 3,5 | 7 | 48,5 | 21 | 20 |
| 18 | 8 | 3,5 | 6 | 46,5 | 19 | 25 |
| 19* | - | 0 | 8 | 50 | 22 | 20 |
| 20* | NVP | 3,7 | 7 | 48,3 | 21 | 20 |
| 21* | 2NVP } 1NVI } | 3,7 | 7 | 48,3 | 21 | 20 |
| 22* | TAC | 1,7 | 8 | 49 | 21,3 | 20 |
| 23* | TAC | 3,7 | 7 | 48,3 | 21 | 20 |
| 24* | TAC+ 2NVP/1NVI | 3,7 2 | 7 | 47,3 | 20 | 20 |

(*) exemples comparatifs.

Les masses moléculaires en poids des produits sont comprises entre 200.000 et 400.000 (déterminé par chromatographie par perméation de gel étalonné au polyméthacrylate de méthyle), la polydispersité des produits des exemples 9 à 18 est comprise entre 2,7 et 4,7.

Les conditions typiques d'obtention des copolymères décrits dans les exemples 9 à 19, 22 et 23 sont données ci-dessous :

Dans un réacteur chauffant muni d'une agitation mécanique, d'une prise de vide et d'une circulation de gaz inerte, on introduit

Solvant : huile 100N 25% poids

| | | |
|---|---|---|
| Monomères | MAM<br>ML<br>MS<br>styrène (sauf ex.9)<br>comonomère azoté (sauf ex.19) | 74,5 %<br>(répartition selon tableau 2) |

Amorceur radicalaire (peroxyde de benzoyle) 0,5% poids.

Le réacteur est soigneusement dégazé par une succession de mises sous pression réduite et sous légère pression de gaz inerte. Le réacteur est alors chauffé à 100°C pendent 5 heures sous agitation, puis la température est élevée jusqu'à 130°C pendant 2 heures pour achever la décomposition de l'amorceur et polymériser éventuellement des résidus de monomères.

Les compositions de copolymères selon les exemples comparatifs 20, 21 et 24 sont préparés selon un mode opératoire identique avec introduction des NVI et/ou NVP en fin de polymérisation.

<u>EXEMPLE 25</u> (Détermination des propriétés des additifs)

Diverses propriétés des additifs préparés dans les exemples 9 à 18 selon l'invention et dans les exemples comparatifs 19 à 24 ont été déterminées comme suit :

a) <u>Le pouvoir épaississant</u> (noté PE) de l'additif est défini comme étant la quantité d'additif à solubiliser dans une huile 200N pour atteindre une viscosité de $15 mm^2/s$ à 100°C.

b) <u>Le point d'écoulement</u> d'une huile 200N formulée avec la proportion d'additif déterminé selon (a) est mesuré selon la norme AFNOR T60 105.

c) <u>La résistance au cisaillement</u> de l'huile 200N formulée comme ci-dessus est déterminée par un essai dans l'injecteur ORBAHN selon la norme DIN 51382 aprés 30 cycles ; elle est exprimée par la perte relative de viscosité cinématique ($-\Delta\eta\%$).

d) <u>Le pouvoir dispersant de l'additif</u>. L'efficacité dispersante des compositions selon l'invention est évaluée par l'essai de dispersion à la tache sur papier filtre, en présence de matière charbonneuse issue d'une huile usagée de moteur Diesel. Le rapport entre les diamètres de la tache noire et de l'auréole d'huile est déterminé au bout de 48 heures, le mélange ayant subi, avant dépôt sur papier filtre, différents traitements.

Les cotations retenues pour cet essai sont les suivantes :

| Diamètre tache sludge / diamètre tache huile | cotation | dispersion |
|---|---|---|
| < 32% | 0 | nulle |
| 32 à 39% | 1 | très faible |
| 40 à 56% | 2 | médiocre |
| 57 à 68% | 3 | moyenne |
| 68 à 74% | 4 | bonne |
| ≥ 75% | 5 | très bonne |

Les résultats de ces déterminations sont indiqués dans les tableaux 3 et 4 suivants.

Tableau 3

| Additif de l'exemple | PE % poids | Point écoulement (°C) | $-\Delta\eta$ % |
|---|---|---|---|
| 9 | 4,2 | −33 | 30 |
| 10 | 4,1 | −24 | 17 |
| 11 | 3,7 | −27 | 24 |
| 12 | 4,3 | −30 | 18 |
| 13 | 3,8 | −24 | 20 |
| 14 | 4,7 | −27 | 17 |
| 15 | 4,5 | −27 | 17 |
| 16 | 4,3 | −27 | 18 |
| 17 | 4,1 | −27 | 19 |
| 18 | 4,8 | −24 | 15 |
| 19* | 3,05 | −30 | 30 |
| 20* | 3,8 | −30 | 20 |
| 21* | 3,3 | −27 | 24 |
| 22* | 3,7 | −30 | 20 |
| 23* | 3,5 | −30 | 23 |
| 24* | 3,05 | −30 | 25 |

(*) Exemples comparatifs.

Tableau 4

| Additif de l'exemple | Efficacité dispersante sans $H_2O$ | | | avec $H_2O$ | | |
|---|---|---|---|---|---|---|
| | 20°C | 200°C/10' | 250°C/10' | 20°C | 200°C/1' | 250°C/10' |
| 9 | 4 | 3 | 3 | 4 | 3 | 3 |
| 10 | 4 | 3 | 3 | 3 | 4 | 3 |
| 11 | 4 | 3 | 3 | 4 | 4 | 4 |
| 12 | 4 | 4 | 4 | 4 | 4 | 4 |
| 13 | 5 | 5 | 4 | 5 | 5 | 4 |
| 14 | 4 | 4 | 4 | 4 | 4 | 4 |
| 15 | 4 | 4 | 3 | 4 | 4 | 4 |
| 16 | 4 | 4 | 4 | 4 | 4 | 4 |
| 17 | 4 | 4 | 4 | 4 | 5 | 4 |
| 18 | 4 | 4 | 3 | 4 | 3 | 3 |
| 19* | 1 | 1 | 1 | 1 | 0 | 1 |
| 20* | 3 | 2 | 2 | 3 | 3 | 2 |
| 21* | 3 | 3 | 3 | 3 | 3 | 3 |
| 22* | 2 | 1 | 1 | 2 | 1 | 1 |
| 23* | 2 | 1 | 1 | 2 | 1 | 1 |
| 24* | 3 | 3 | 3 | 3 | 3 | 3 |

(*) Exemples comparatifs.

D'après le tableau 4, il apparaît que, dans les conditions d'essais adoptées et pour les répartitions en motifs méthacryliques et styrèniques indiquées, l'incorporation des monomères azotés dans la préparation des copolymères selon l'invention confère de bonnes propriétés dispersantes aux additifs obtenus.

L'exemple 19 montre qu'un copolymère préparé en l'absence de monomère azoté n'a qu'une très faible efficacité dispersante. Les exemples 20 et 21 sont relatifs à des copolymères greffés selon les techniques conventionnelles par les monomères usuels NVP, NVI.

Les exemples 22 et 23 montrent la très faible efficacité du triallylcyanurate lorsqu'il est incorporé tel quel dans l'additif.

L'exemple 24 est relatif à un copolymère préparé par greffage d'un mélange de 2/3 NVP et 1/3 NVI sur un copolymère tel que celui de l'exemple 23. L'incorporation préalable du TAC n'améliore pas l'efficacité dispersante obtenue par l'introduction en fin de polymérisation du mélange de NVP et NVI. (comparer avec l'exemple 21).

Les exemples 9 à 18 sont relatifs à des copolymères selon l'invention et illustrent la variété des structures possibles du monomère azoté caractéristique de l'invention et des compositions de copolymères l'incluant.

EXEMPLE 26

Pour s'assurer que l'efficacité dispersante est bien liée à des groupements azotés fixés sur le polymère, on a traité les produits des exemples 11, 15 et 16 par dialyse, pour éliminer les monomères qui n'auraient pas copolymérisé ou les polymères de faible masse molaire.

La dialyse est réalisée en utilisant comme solvant du cyclohexane au reflux. Après séparation, la fraction polymère est précipitée dans du méthanol, séchée puis remise en solution dans une huile 200N.

Il apparaît après dialyse que le polymère de forte masse molaire représente plus de 95% du poids des monomères initialement introduits et que l'efficacité dispersante du polymère après dialyse est identique à celle de la solution de polymère initiale.

## Revendications

1. Composition de copolymère, caractérisée en ce qu'elle comprend des motifs dérivant d'au moins un ester acrylique ou méthacrylique et des motifs dérivant d'au moins un monomère vinylique azoté obtenu par réaction du triallylcyanurate avec au moins une amine aliphatique monoprimaire ou biprimaire, répondant à la formule générale

$$R^1 \leftarrow\!\!(\underset{R^2}{\underset{|}{N}}-A\!\!\rightarrow\!)_x \; NH_2$$

dans laquelle $R^1$ représente l'atome d'hydrogène ou un radical alkyle $-C_nH_{2n+1}$, où n est un nombre entier de 1 à 24 ; x peut être zéro lorsque n est d'au moins 4 ou un nombre de 1 à 10 dans tous les cas, $R^2$ représentant l'atome d'hydrogène ou un radical alkyle $-CmH_{2m+1}$, ou m est un nombre entier de 1 à 24, et A représentant un groupement alkylène de 2 à 6 atomes de carbone, ledit monomère vinylique azoté renfermant 1 ou 2 cycles triaziniques et comprenant au moins 1 groupement allylique.

2. Composition de copolymère selon la revendication 1, caractérisée en ce qu'elle comprend en outre des motifs dérivant d'au moins un monomère vinylaromatique.

3. Composition de copolymère selon la revendication 2, caractérisée en ce que ledit monomère vinylaromatique est le styrène.

4. Composition de copolymère selon l'une des revendications 1 à 3, caractérisée en ce que ledit ester acrylique ou méthacrylique consiste en au moins un acrylate ou méthacrylate d'alkyle, linéaire ou ramifié, de 1 à 22 atomes de carbone.

5. Composition de copolymère selon l'une des revendications 1 à 4, caractérisée en ce que ledit ester acrylique ou méthacrylique est mis en jeu en une proportion de 55 à 99,8% en poids ; ledit monomère vinylique azoté est mis en jeu en une proportion de 0,2 à 10% en poids ; et ledit monomère vinylaromatique est mis en jeu en une proportion de 0 à 35% en poids, par rapport au poids total desdits monomères.

6. Composition de copolymère selon l'une des revendications 1 à 5, caractérisée en ce qu'elle présente une masse moléculaire moyenne en poids de 30.000 à 800.000 et une polydispersité inférieure à 5.

7. Composition de copolymère selon l'une des revendications 1 à 6, caractérisée en ce que ledit monomère vinylique azoté résulte de la réaction de 1 à 2 moles d'amine monoprimaire ou biprimaire par mole de triallylcyanurate, avec élimination de l'alcool allylique formé.

8. Composition de copolymère selon l'une des revendications 1 à 6, caractérisée en ce que ledit monomère vinylique azoté résulte de la réaction de 0,5 mole d'amine biprimaire par mole de triallulcyanurate, avec élimination de l'alcool allylique formé.

9. Composition lubrifiante caractérisée en ce qu'elle comprend une proportion majeure d'huile lubrifiante et une proportion mineure, suffisante pour en améliorer les popriétés de viscosité, d'au moins une composition de copolymère selon l'une des revendications 1 à 8.

10. Composition lubrifiante selon la revendication 9, caractérisée en ce que la proportion de composition de copolymère est de 0,5 à 10% en poids par rapport à l'huile lubrifiante.

**Patentansprüche**

1. Copolymer-Zusammensetzung, gekennzeichnet durch einen Gehalt an Komponenten, die sich von mindestens einem Acrylsäure- oder Methacrylsäureester ableiten, und an Komponenten, die sich von mindestens einem stickstoffhaltigen Vynilmonomer ableiten, das erhalten wird durch Umsetzung von Triallylcyanurat mit mindestens einem monoprimären oder biprimären aliphatischen Amin der allgemeinen Formel

$$R^1 \leftarrow\!\!(\underset{R^2}{\underset{|}{N}}-A\!\!\rightarrow\!)_x \; NH_2$$

in der $R^1$ ein Wasserstoffatom oder ein Alkylrest $-C_nH_{2n+1}$ bedeutet, worin n eine ganze Zahl von 1 bis 24 ist; x Null sein kann, wenn n mindestens 4 ist oder immer eine Zahl von 1 bis 10 bedeutet; $R^2$ ein Wasserstoffatom oder einen Alkylrest $-C_mH_{2m+1}$ bedeutet, worin m eine ganze Zahl von 1 bis 24 ist; und A eine Alkylengruppe mit 2 bis 6 Kohlenstoffatomen bedeutet, wobei das stickstoffhaltige Vinylmonomer 1 oder 2 Triazinringe umfaßt und mindestens eine Allylgruppe aufweist.

2. Copolymer-Zusammensetzung nach Anspruch 1, dadurch gekennzeichnet, daß sie außerdem Komponenten aufweist, die sich von mindestens einem vinylaromatischen Monomer ableiten.

3. Copolymer-Zusammensetzung nach Anspruch 2, dadurch gekennzeichnet, daß das vinylaromatische Monomer Styrol ist.

4. Copolymer-Zusammensetzung nach einem der Ansprüche 1 bis 3, dadurch gekennzeichnet, daß der Acrylsäure- oder Methacrylsäureester aus mindestens einem linearen oder verzweigten Alkylacrylat oder -methacrylat mit 1 bis 22 Kohlenstoffatomen besteht.

5. Copolymer-Zusammensetzung nach einem der Ansprüche 1 bis 4, dadurch gekennzeichnet, daß der Acrylsäure- oder Methacrylsäureester in einer Menge von 55 bis 99,8 Gew.-% eingesetzt wird; das stickstoffhaltige Vinylmonomer in einer Menge von 0,2 bis 10 Gew.-% eingesetzt wird; und das vinylaromatische Monomer in einer Menge von 0 bis 35 Gew.-% eingesetzt wird, bezogen auf das Gesamtgewicht dieser Monomere.

6. Copolymer-Zusammensetzung nach einem der Ansprüche 1 bis 5, dadurch gekennzeichnet, daß sie ein gewichtsmittleres Molekulargewicht von 30.000 bis 800.000 und eine Polydispersität von unter 5 aufweist.

7. Copolymer-Zusammensetzung nach einem der Ansprüche 1 bis 6, dadurch gekennzeichnet, daß das stickstoffhaltige Vinylmonomer aus der Umsetzung von 1 bis 2 Mol monoprimärem oder biprimärem Amin pro Mol Triallylcyanurat unter Entfernung des gebildeten Allylalkohols stammt.

8. Copolymer-Zusammensetzung nach einem der Ansprüche 1 bis 6, dadurch gekennzeichnet, daß das stickstoffhaltige Vinylmonomer aus der Umsetzung von 0,5 Mol biprimärem Amin pro Mol Triallylcyanurat unter Entfernung des gebildeten Allylalkohols stammt.

9. Schmiermittelmasse, gekennzeichnet durch einen Gehalt an einer Hauptmenge an Schmieröl und einer kleineren, zur Verbesserung der Viskositätseigenschaften ausreichenden Menge an mindestens einer Copolymer-Zusammensetzung nach einem der Ansprüche 1 bis 8.

10. Schmiermittelmasse nach Anspruch 9, dadurch gekennzeichnet, daß die Menge an Copolymer-Zusammensetzung 0,5 bis 10 Gew.-%, bezogen auf das Schmieröl, beträgt.

**Claims**

1. A copolymer composition, characterized in that it comprises recurrent units deriving from at least one acrylic or methacrylic ester and recurrent units deriving from at least one nitrogenous vinyl monomer obtained by reacting triallylcyanurate with at least one monoprimary or biprimary aliphatic amine, complying with the general formula:

$$R^1 - ( \underset{R^2}{\underset{|}{N}} - A )_x \; NH_2$$

wherein $R^1$ is a hydrogen atom or an alkyl radical $-C_nH_{2n+1}$, in which $\underline{n}$ is an integer from 1 to 24, $\underline{x}$ ranges from 1 to 10 or may be a 0 when $\underline{n}$ is at least 4, $R^2$ is a hydrogen atom or an alkyl radical $-C_mH_{2m+1}$, $\underline{m}$ being an integer from 1 to 24, and A is an alkylene group of 2–6 carbon atoms, said nitrogenous vinyl monomer containing 1 or 2 triazine rings and comprising at least one allyl group.

2. A copolymer composition according to claim 1, characterized in that it further comprises recurrent units deriving from at least one vinylaromatic monomer.

3. A copolymer composition according to claim 2, characterized in that said vinylaromatic monomer is styrene.

4. A copolymer composition according to one of claims 1 to 3, characterized in that said acrylic or methacrylic ester consists of at least one linear or branched alkyl acrylate or methacrylate having 1 to 22 carbon atoms in the alkyl group.

5. A copolymer composition according to one of claims 1 to 4, characterized in that said acrylic or methacrylic ester is used in a proportion from 55 to 99.8% by weight, said nitrogenous vinyl monomer is used in a proportion from 0.2 to 10% by weight, and said vinylaromatic monomer is used in a proportion from 0 to 35% by weight, with respect to the total weight of said monomers.

6. A copolymer composition according to one of claims 1 to 5, characterized by a weight average molecular weight from 30 000 to 800 000 and a polydispersity lower than 5.

7. A copolymer composition according to one of claims 1 to 6, characterized in that said nitrogenous vinyl monomer results from the reaction of 1 to 2 moles of monoprimary or biprimary amine per mole of triallylcyanurate, with removal of the allyl alcohol formed.

8. A copolymer composition according to one of claims 1 to 6, characterized in that said nitrogenous vinyl monomer results from the reaction of 0.5 mole of biprimary amine per mole of triallylcyanurate, with removal of the allyl alcohol formed.

9. A lubricating composition characterized by a major proportion of lubricating oil and a minor proportion, sufficient to improve the viscosity properties thereof, of at least one copolymer composition according to one of claims 1 to 8.

10. A lubricating composition according to claim 9, characterized in that the amount of copolymer composition is from 0.5 to 10% by weight in proportion to the lubricating oil.